(19)

Europäisches
Patentamt
European
Patent Office
Office européen
des brevets

(11) **EP 3 995 815 A1**

(12) **EUROPEAN PATENT APPLICATION**

(43) Date of publication:
**11.05.2022  Bulletin 2022/19**

(21) Application number: **21207038.7**

(22) Date of filing: **09.11.2021**

(51) International Patent Classification (IPC):
**G01N 21/47** *(2006.01)*        **G01N 21/55** *(2014.01)*
**G01N 21/57** *(2006.01)*

(52) Cooperative Patent Classification (CPC):
**G01N 21/55; G01N 21/4785;** G01N 21/4738;
G01N 21/57

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **09.11.2020  IT 202000026735**

(71) Applicant: **Istituto Nazionale di Ricerca
Metrologica
(I.N.RI.M.)
10135 Torino (IT)**

(72) Inventor: **IACOMUSSI, Paola
10135 Torino (TO) (IT)**

(74) Representative: **Crovini, Giorgio
Buzzi, Notaro & Antonielli d'Oulx S.p.A.
Corso Vittorio Emanuele II, 6
10123 Torino (IT)**

(54) **A ROAD REFLECTANCE REFERENCE DEVICE, CORRESPONDING INSTRUMENT
CALIBRATION KIT AND MANUFACTURING METHOD**

(57)    A reference device for measurement of reflection characteristics, in particular measurement of luminance, of the surface of road pavements (100) by a photometric instrument configured to detect the light reflected by said road pavements in determined geometric conditions (Q, P, O, $\alpha$, $\beta$, $\varepsilon$) of incidence ($\beta$, $\varepsilon$) of the light on the road pavement and of detection ($\alpha$) of said reflected light, comprising a synthetic road pavement sample product comprising a support (110) having a support thickness (To) and at least one flat base on a first side and a patterned surface on a second side opposed said first side,
wherein said patterned surface comprises a solid pattern (120) of pillar-like formations (122, 124) and of channel-like formations (126) separating said pillar-like formations (122, 124) from one another,

a set of pattern parameters ( $T_i^l$, $T_i^h$, $\theta$, $\Delta$, $L_i$, $D_i$, $K_i$) associated to geometric properties of said pillar-like formations (122, 124) and of said channel-like formations (126) being distributed over said solid pattern (120) according to a stochastic distribution which satisfies given ranges of said pattern parameters ( $T_i^l$, $T_i^h$, $\theta$, $\Delta$, $L_i$, $D_i$, $K_i$).

FIG. 2

EP 3 995 815 A1

**Description**

Technical field

The description relates to metrological methods to analyze optical properties of the different materials, such as gloss or spatial luminance distribution.
One or more embodiments may be applied to instruments and methods to measure luminance variations and reduced luminance coefficient values of road surfaces, in particular to calibration of instruments.

Technological Background

In order to ensure safety and visibility to all road users, it is known to issue standards and reference documentation in which levels of luminance are set or limited for road lighting systems to satisfy.
Luminance is a photometric measure of the luminous intensity per unit area of light traveling in a certain direction.
Parameters useful in designing road lighting systems, are discussed for instance in the following documents:

"Light and lighting-road lighting. part 3: Calculation of performance", European standard, CEN, 2015, EN 13201-3:2015;
"Road lighting - Part 5: Energy performance indicators", European standard, CEN, 2015, EN 13201-5:2015;
"Light and lighting-road lighting. Part 2: Performance requirements", European standard, CEN, 2015, EN13201-2:2015.
Specifically, luminance coefficients may be useful:

-   to set energy performance parameters of a lighting installation as a function of spatial luminous intensity of lighting fixture, facilitating to calculate expected road luminance values;
-   designing road lighting system to improve road safety conditions at night;
-   to perform glare evaluation, facilitating to improve safety and comfort during night-time (for instance, in smart cities).

Road surface reflecting behavior may be derived from measurements collected in one or more tabular datasets, knowns as CIE tables (or r-tables) and indicate the ability of the surface to reflect incident light in the direction of the observer. Document "Road surface and road marking reflection characteristics", Technical report, CIE 2001, CIE144:2001 discusses such tabular datasets.
Such a solution may present one or more of the following drawbacks for vision performance, optimization and energy consumption of modern lighting installations, for instance:

-   document P. Verny, C. Chain, F. Lopez: "Impact of real road photometry on public lighting design", pages CD.ROM, Proc. Of the CIA 26th Session, Bejing, 2007, discusses that properties of current road pavements have progressively changed and show that using the current standards based on available CIE data can lead to errors, as the photometric properties of the road materials can change significantly over time;
-   document Gidlund, H., Lindgren, M., Muzet, V., Rossi, G. & Iacomussi, P. (2019) Road Surface Photometric Characterisation and Its Impact on Energy Savings. Coatings journal DOI: 10.3390/coatings9050286 discusses the impact of the use of outdated road surface reflectance data and its impact on energy consumption;
-   outdated measurement values may hardly be compatible with new types of luminaires 10, e.g., using Solid-State Lighting (briefly, SSL), which can have very different (e.g., sharp) luminous intensity distributions;
-   lighting engineers and designers may balance unreliable (or unavailable) data employing oversizing or adopt, without preliminary considerations, the same reference data to all lighting situations, possibly leading to reduced energy savings;
-   using tables of fixed values may make difficult to exploit opportunities, set forth by smart lighting technologies, to adapt the light flux at any time, in terms of both intensity and direction, according to the brightness and specularity of the road pavement;
-   glare evaluation of the dispersed light in the upward direction, for instance to improve visibility of small objects on the road minimizing road luminance level, not only for drivers but also for pedestrians, may hardly be evaluated accurately;
-   it may be hardly adapted to take into account the emergence of new types of road material, like the surfaces for road drainage or colored pavements;

Furthermore, document "Recommended system for mesopic photometry based on visual performance", Technical report, the international commission on Illumination CIE, 2010, CIE 191:2011 discusses the importance to take into account also neglected spectral radiance coefficients which is being introduced in some national (UNI, BSI) and international guidelines. For instance, document "The effect of spectral power distribution on lighting for urban and pedestrian areas", technical report, the international commission on Illumination CIE, 2014, CIE 206:2014, is exemplary of such international guidelines.

Currently available measurement devices for road surface luminance characterization, for instance goniophotometers, may present one or more of the following drawbacks:

- present high costs and be time consuming,
- be available in a limited number of research institutes, almost exclusively in National Metrological Institutes;
- lack the possibility to obtain a clear assessment of photometric and geometrical performances,
- make hardly possible to perform inter-comparisons reliably,
- lack tested or provided traceability of measured data.

At the same time, portable devices for in situ measurements have present limited reliability and traceability to the reference units, as well as a limited range of few angular direction for which they provide data.

Object and summary

An object of one or more embodiments is to contribute in providing such an improved solution.

According to one or more embodiments, that object can be achieved by means of a method having the features set forth in the claims that follow.

A method of manufacturing of a reference material device to measure luminance properties of road pavements may be exemplary of such a method.

One or more embodiments may relate to a corresponding reference material device.

A reference material device configured to measure luminance and reduced luminance coefficients of road surfaces.

One or more embodiments may relate to a corresponding instrument calibration kit.

An instrument calibration kit comprising reference materials may be exemplary of such a system.

One or more embodiments may relate to using such an instrument calibration kit in calibrating a luminance measurement instrument, for instance a portable device for in situ measurement of road surface properties.

One or more embodiments may substitute samples of road surface extracted from a road surface with samples easier to replicate, ensuring reliability, repeatability and stability of the calibration objects for luminance measurement.

One or more embodiments may use materials for 3D printing to manufacture Reference Materials (briefly, RMs) for measuring road luminance, in particular (reduced) luminance coefficients.

One or more embodiments may provide one or more of the following advantages:

- updated and reliable data on values of luminance parameters,
- possibility to develop and provide new calibration services;
- possibility of using portable instruments, to perform measurements directly on the road,
- providing reliable calibration procedures,
- providing traceability of measurement results and provide adequate uncertainty evaluations,
- facilitating reducing oversize of road light installations, ensuring energy savings while maintaining a safe environment.

One or more embodiments may facilitate use source photometric (or radiometric) properties in place of goniophotometric properties ((KCDB - Key Comparison Database of BIPM Bureau International des Poids et Mesures)

One or more embodiments may counter problems with sampling and handing of road surface samples.

One or more embodiments may facilitate having stables and reproducible objects or artefacts to be used as reference materials based on 3D printing.

One or more embodiments may facilitate providing purposely characterized and selected 3D printable materials for the manufacturing of road luminance measurement RMs.

One or more embodiments may facilitate adopting new and innovative lighting solutions.

One or more embodiments may facilitate increasing road safety ensuring to satisfy standard luminance requirement for road users' safety and visibility.

One or more embodiments may facilitate providing road lighting systems with increased energy savings and performances, leading to more efficient and safer roads for drivers and pedestrians.

One or more embodiments may facilitate increasing replacement of old lighting luminaires with more effective SSL luminaires, possibly combined with adaptive system controls, facilitating reaching energy savings up to 70% and reducing public electrical consumption in cities.

One or more embodiments may facilitate obtaining reliable and traceable values of q and r coefficients in different conditions and with new technologies, such as for instance new road surface materials such as so-called "bright pavements".

One or more embodiments may support National Metrology Institutes (briefly, NMIs) in analyzing road materials properties and ensuring a traceability chain on (reduced) luminance coefficient.

As mentioned in the foregoing, the present disclosure provides solutions regarding a reference device for measurement of reflection characteristics, in particular measurement of luminance, of the surface of road pavements by a photometric instrument configured to detect the light reflected by said road pavements in determined geometric conditions of incidence of the light on the road pavement and of detection of said reflected light, comprising a synthetic road pavement sample product comprising a support having a support thickness and at least one flat base on a first side and a patterned surface on a second side opposed said first side,

> wherein said patterned surface comprises a solid pattern of pillar-like formations and of channel-like formations separating said pillar-like formations from one another,
> a set of pattern parameters associated to geometric properties of said pillar-like formations and of said channel-like formations being distributed over said solid pattern according to a stochastic distribution which satisfies given ranges of said pattern parameters.

In variant embodiments, said prism-like formations each include a pillar-like body and an exposed facet and wherein said set of pattern parameters comprises a first subset of pattern parameters associated to a certain thickness of said pillar-like body of said prism-like formations as well as to a certain diameter and a certain tilt , with respect to said flat base, of said facet ,

In variant embodiments, said channel-like formations have a certain depth equal to said certain thickness of adjacent pillar-like prism-like formations and wherein said set of pattern parameters comprises a second subset of pattern parameters associated to a first width of said channel-like formation located at a same level of said reference thickness and a second width of said channel-like formation located at a same level of said certain thickness of said adjacent pillar-like prism-like formations .

In variant embodiments, said device comprises thermoplastic material.

In variant embodiments, said device is obtained via additive manufacturing.

In variant embodiments, the device comprises a thermoplastic 3D printable material having specific light-reflecting properties selected out of glossy black, matte grey, and matte black coloring.

In variant embodiments, values of said a certain diameter of said facet of said prism-like formations in the first subset of pattern parameters in said set of pattern parameters are in a range between about 6 millimeters and about 10 millimeters.

In variant embodiments, a ratio between facets having a value of tilt equal to about zero and of facets having a tilt value different from zero is about 20%.

In variant embodiments, values of said certain thickness of said pillar-like body of said prism-like formations in the first subset of pattern parameters in said set of pattern parameters range between about 5 millimeters and about 10 millimeters.

In variant embodiments, said given ranges of said pattern parameters are drawn from a stochastic distribution of parameters of road pavements.

In variant embodiments, said measurement setup is configured to measure the light reflected by road surfaces illuminated by a light source emitting light impinging thereon at an observed point, the light propagating from the source along a light path so as to determine, as seen from an observation point at a given viewing direction angle $\alpha$ with respect to the road, in particular of having the value of 1°:

> a) a first incidence angle between the light path and a normal to the road surface; and
> b) a second incidence angle between a vertical plane passing for the observation point and the observed point and a vertical plane passing for the observed point and the road luminaire.

The solution here discloses refers also to a kit of reference materials configured to calibrate a photometric instrument configured to detect the light reflected by said road pavements in determined geometric conditions of incidence of the light on the road pavement and of detection of said reflected light to measure the luminance of a road surface, the kit comprising at least a reference device according to the previous embodiments.

In variant embodiments, said kit comprises a plurality of reference devices according to the previous embodiments each having different values of pattern parameters.

In variant embodiments, said kit comprises further reference devices with smooth or different patterns.

The solution refers also to a method of manufacturing a reference device for measurement of reflection characteristics, in particular measurement of luminance, of the surface of road pavements by a photometric instrument configured to detect the light reflected by said road pavements in determined geometric conditions of incidence of the light on the road pavement and of detection of said reflected light, comprising a synthetic road pavement sample product according to any of the previous embodiments, the method comprising:

defining said given ranges of said pattern parameters,
performing a simulation of distributions of pillars 122 in said support , selecting at least a distribution of pillars which satisfies said given ranges of said pattern parameters and obtaining a digital 3D model of said selected distribution,
manufacturing said support wherein said patterned surface comprises a solid pattern corresponding to said digital 3D model of said selected distribution.

In variant embodiments, said operation of manufacturing comprises manufacturing via additive manufacturing, in particular using thermoplastic material.

In variant embodiments, comprises manufacturing via additive manufacturing, in particular using thermoplastic material and said thermoplastic material has specific light-reflecting properties selected out of glossy black, matte grey, and matte black coloring.

The solution refers also to a method of measurement of road surface reflection properties comprising using a kit according to one of the previous embodiments.

The claims are an integral part of the technical teaching provided herein with reference to the embodiments.

Brief description of the several views of the drawings

One or more embodiments will now be described, by way of non-limiting example only, with reference to the annexed Figures, wherein:

- Figure 1 has been discussed in the foregoing;
- Figure 2 to 5 are perspective views of embodiments as exemplified herein,
- Figure 6 is a diagram of a method as per the present disclosure.

Detailed description of exemplary embodiments

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular conformations, structures, or characteristics may be combined in any adequate way in one or more embodiments.

The references used herein are provided merely for convenience and hence do not define the extent of protection or the scope of the embodiments.

As discussed herein, the term reference material (briefly, RMs) device refers to objects manufactured with the aim to be used in all stages of the measurement process, including measurement method validation, instrument calibration and quality control. They may also be used in inter laboratory comparisons for method validation and for assessing laboratory proficiency. The definition of reference material in the specification ISO 17034 is also recalled, i.e. a material, sufficiently homogeneous and stable with respect to one or more specified properties, which has been established to be fit for its intended use in a measurement process. Reference it is also made to the reference material definition in ISO/IEC Guide 99:2007. A reference material device may be therefore a device which is manufactured and configured to present the reference material behaviour with respect to one or more specified properties, i.e. sufficiently homogeneous and stable with respect to one or more specified properties, which has been established to be fit for its intended use in a measurement process. As discussed herein, the term 3D printing refers to additive manufacturing processes, per se known, which are suitable to build three-dimensional (briefly, 3D) objects (or artefacts) from a digital model by various processes in which material, for instance plastic or metallic, is joined or solidified. Additive manufacturing may provide a flexible manufacturing process facilitating to obtain customized products.

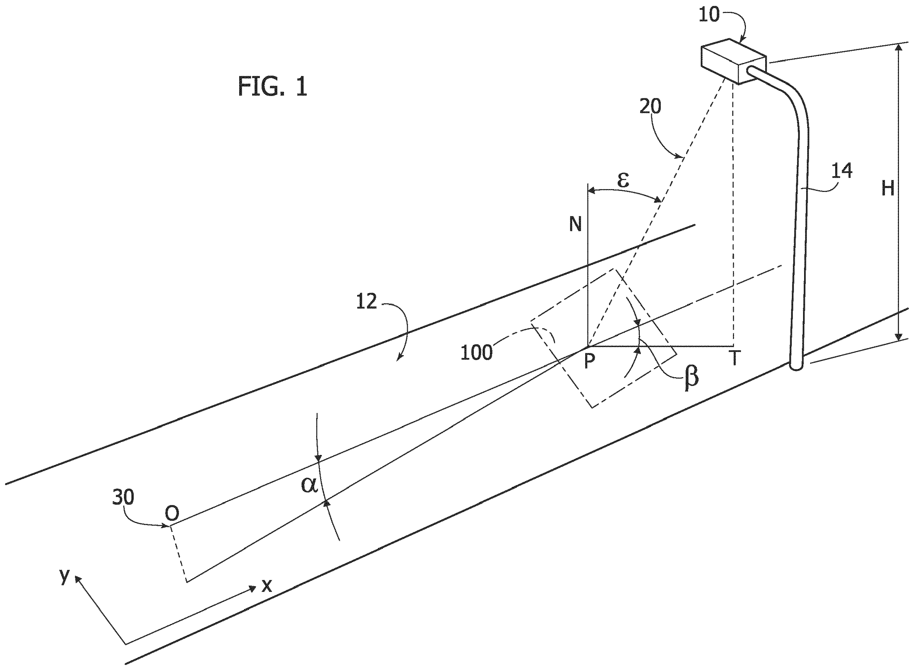

As exemplified in Figure 1, a luminaire 10 configured to emit light and located at a side of a road surface 12 extending along in a longitudinal direction X and in a transverse direction Y on a XY-plane. The luminaire 12 may be mounted on a light pole 14 at a distance H from the road surface 12. Light emitted from the luminaire 10 follows a light path 20 from a photometric center Q of the luminaire 10 towards a point P on the road surface 12. The point P may be different from point T belonging to a normal QT to the road surface 12 passing through the photometric center Q of the luminaire 10. The light path 20 forms an angle $\varepsilon$ , defined as the angle between a N normal at point P to the road surface 12 and the light path 20 of the emitted light incident at point P, measured in degrees or radians.

A further angle $\beta$ may be defined between oriented traces of a vertical planes belong in the horizontal XY-plane of the road surface 12, i.e. as an angle between a vertical plane passing for the observation point O and the observed point P and a vertical plane passing for the observed point P and the road luminaire 10. In other words, the angle $\beta$ may be defined between:

a first intersection line between a plane normal to the XY-plane including points O and P with the XY-plane, and
a second intersection line PT between a plane normal to the XY-plane including points P and T and the XY-plane.

Luminance may be used to amount light passing through, being emitted from, or being reflected from a particular area and falling within a certain solid angle.

In order to set levels of luminance, road lighting system design may envisage correlating the luminous flux incident on the road surface with its luminance trough the reflective characteristics of the surface.

Luminance of the luminaire 10 at a point P of the road surface as seen from an observer 20 from an observation point O (e.g., eye-quota of the observer 30) along a viewing direction angle $\alpha$, i.e. the angle made by the line connecting the observed point P and the observation point O with its projection on the road plane.
may be estimated as a function of:

- the direction of the incident luminous flux, namely angle of incidence $\varepsilon$ and further angle $\beta$ ,
- the viewing direction angle $\alpha$,
- the reflective characteristics of the road surface, such as spectral reflectance and reflectance spatial distribution.

For instance, to evaluate lighting features of a single road lighting pole 10, parameters which may be suitable to be taken into account to provide such a correlation may comprise a luminance coefficient q and a reduced luminance coefficient r, which may be expressed, respectively, as:

$$q = \frac{L}{E}$$

$$r = qcos^3(\varepsilon)$$

where:

L is the luminance measured in candela units (1 candela = 1 cd) per square meter (cd/m$^2$), and
E is the illuminance measured in lux units (1 lux =1 lx= 1 cd·sr/m$^2$).

While the spectral reflectance is neglected, reference values of the luminance coefficient q and the reduced luminance coefficient r are "unknowns" in a scenario as exemplified in Figure 1, meaning there is no direct relation with respect to the observable parameters (e.g., the viewing angle $\alpha$ and lighting direction $\varepsilon$).

The value of the viewing angle $\alpha$ is conventionally assigned (currently equal to 1°, equivalent to distances of 60 to 90 m for a driver of a passenger car). Because of this, the reflection properties of a road surface can be described by a table of r values with $\beta$ and $\varepsilon$ as parameters, indicated as an "r-table" or "CIE table". Such a table is indicated as CIE 144 C1 table and is discussed, for instance, in document [4] mentioned in the foregoing.

Therefore, a measurement setup may be obtained by providing a light source to represent the luminaire 10, and a photosensor/luminancemeter or a ILMD (Image Luminance Measuring Device), in general a luminance measuring device, placed in the observation point O, such light source and photosensor being geometrically arranged so as to define values of viewing direction angle $\alpha$, further angle $\beta$ and lighting direction, which are compatible with the measurement.

Thus, summarizing the above, a photometric instrument configured to detect the light reflected by said road pavements in determined geometric conditions ,Q, P, O, $\alpha$, $\beta$, $\varepsilon$ of incidence, $\beta$, $\varepsilon$ of the light on the road pavement and of detection α of said reflected light, is for instance configured to measure the light reflected from road surfaces - in order to measure photometric properties such as the reflected luminance and/or the reduced coefficients r- illuminated by a light source representing the road luminaire 10 emitting light impinging thereon at an observed point P, the light propagating from the light source 10, in particular from a photometric center Q of the road luminaire 10, along a light path 20 so as to determine, as seen from an observation point O, where the photosensor or videocamera is arranged in the setup, at a given viewing direction angle α with respect to the road, in particular having the value of 1°:

c) a first incidence angle ε, i.e. the lighting direction, between the light path 20 and a normal N to the road surface 12; and

d) a second incidence angle β between a vertical plane passing for the observation point O and the observed point P and a vertical plane passing for the observed point P and the road luminaire 20. Such road reflective characteristics measurement setup may be embodied for instance by a portable device for in situ measurement of road surface properties.

A portable device suitable for use with the solutions described herein is discussed for instance in the document Sørensen, Kai: "A box for the measurement of road surface reflection properties" - version 21 February 2018 (https://nmfv.dk/wp-content/uploads/2018/05/A-box-for-the-measurement-of-road-surface-reflection-properties-version-21-February-2018.pdf). In such device, to calculate reduced coefficients r1, r2 according to the CIE Tables, two sources (lighting panels) with two different lighting angles (0° and 63,4°) are provided, which therefore impinge on the road surface in multiple observed point. The reflected light is conveyed by a prisma placed at the viewing direction angle to a camera.

A further portable measurement apparatus, in particular a goniophotometer, suitable for use in co-operating with the solutions described herein toolkit is discussed in the publication Y. Guillard V. Muzet, JL.Paumier. "Coluroute: A mobile gonio-reflectometer to characterize the road surface photometry", In Proceedings of CIE International Symposium on Road Surface Characteristics, pages CD-ROM, 2007. In this case a plurality of light sources is used impinging at different angles, defining many combinations of angles β and ε. The reflect light is collected by a lens at the observation point in an optic fiber.

Further devices suitable for use with the solution here described are discussed in the review publication by Muzet et al." Review of road surface photometry methods and devices - Proposal for new measurement geometries", Lighting Research & Technology, 2020;0: 1-17 ( https://journals.sagepub.com/doi/full/10.1177/147715352 0958454). As also indicated in some of these documents, the value of the viewing angle according to CIE tables is 1°, nevertheless other values can be possible for different applications, as the viewing of angle of 1° may be kept for extra-urban environment while for different driving conditions and road users other values can be used, e.g. 2.29° for urban environment and consistency with the road marking standard and CIE 144, 5° for urban driving at low speed, cycling and scooters, and also 10° or 20° for light pollution impact evaluation. Therefore, it is underlined that the solution here described may operate with any value of viewing direction angle α. The solution here described is however preferably are applied to the value of viewing direction angle α equal to 1. In various embodiments the value of viewing direction angle α may be lower or equal than 5°.

One or more embodiments may use a reference device 100 manufactured so as to behave as a "synthetic" sample of road pavement. In other words, such a reference device may have photometric properties configured to mimic a photometric behavior of the road surface, for instance in a measurement setup as exemplified in Figure 1.

Such a reference device 100 may be used in a method of road luminance measurement and calibration.

As mentioned, a reference device, also called reference material (briefly, RM) is an object or device comprising a material homogeneous and stable with respect to one or more specified properties (quantitative or qualitative, possibly together with an associated measurement uncertainty), fit for use in a measurement process. Uses may include the calibration of a measurement system, assessment of a measurement procedure, assigning values to other materials and quality control.

As exemplified herein, RM devices 100 are manufactured using a 3D printing process to shape one or more materials having adequate photometric properties (e.g., gloss, spectral reflectance distribution and spatial reflectance distribution).

Advantageously, a technical solution as disclosed herein may comprise manufacturing a kit of RMs as portable "tiles" having a quadrangular base, preferably having a square size with an area of 20 cm².

In one or more embodiments, each RM device 100 may comprise an external frame to identify a reference surface plane (maximum height of the object).

As mentioned, 3D printing or additive manufacturing (briefly, AM) processes may comprise processes, per se known, such as binder jetting, directed energy deposition, material extrusion, material jetting, powder bed fusion, sheet lamination, vat photopolymerization, fused filament fabrication (also known as Fused deposition modeling - FDM). Some methods melt or soften the material to produce the layers. For instance, FDM processing produces an object or part by extruding small beads or streams of material, which quickly harden to form layers. For instance, a filament of thermoplastic, metal wire, or other material is fed into an extrusion nozzle head (3D printer extruder), which heats the material and turns the flow on and off. Another technique fuses parts of the layer and then moves upward in the working area, adding another layer of granules and repeating the process until the piece has built up. FFF/FDM may facilitate to use more recycled materials, using directly pellets, without performing conversion to filament, in a process called fused particle fabrication (briefly, FPF or fused granular fabrication - FGF).

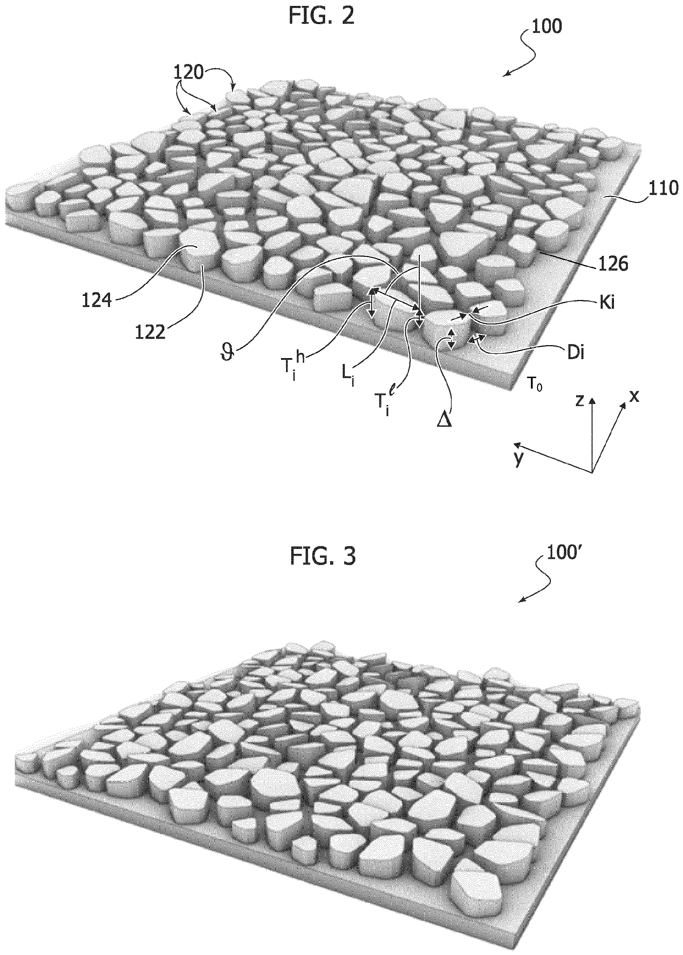

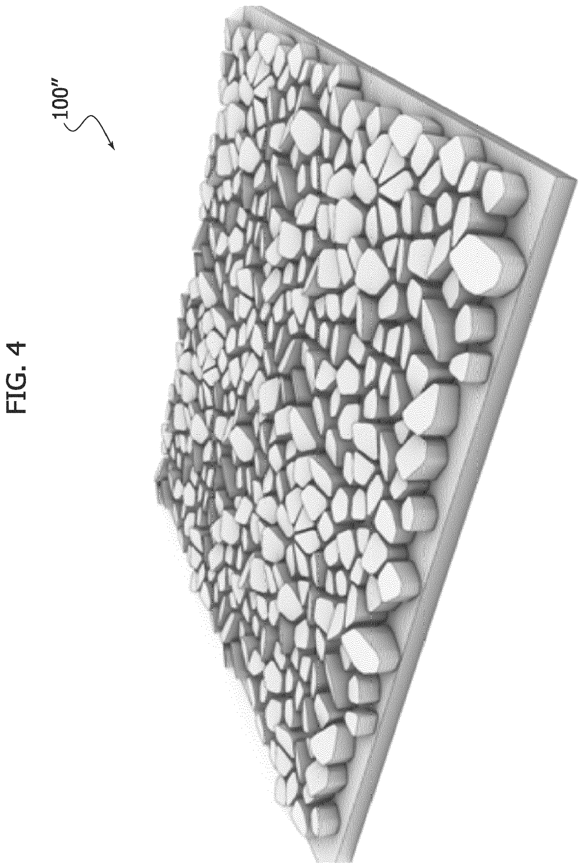

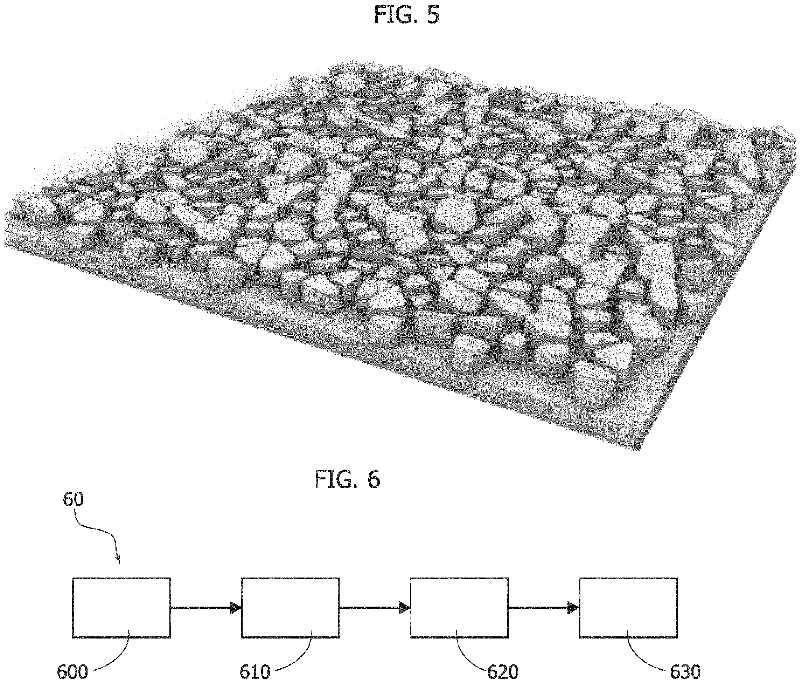

Figures 2 to 5 are exemplary of such RM devices 100.

As mentioned, such RM devices are manufactured to mimic the physical, in particular photometric, properties of a road surface.

As known to those of skill in the art, such a road surface comprises a layer of concrete or asphalt pavement which may comprise granular elements, such as small rocks, for instance, held together with a binding, viscous substance, such as bitumen, for instance.

When illuminated by a light beam impinging on such a road surface, the binder shows a diffuse reflectance photometric behavior while the rocks, whose exposed side are quite flat as a result of flattening processing performed on the road surface, contribute to the specular component of the reflected light. As mentioned, a different CIE144 r-table of reflective parameter may be prepared for a different type of road in term of color, type of binder and rock size.

As exemplified in Figures 2 to 5, the RM devices 100 comprise a support 110, quadrangular in the example, e.g. a tile, having a given thickness To and at least one flat base on a first side and a patterned surface on a second side opposed said first side, in particular comprise a sculptured profile, somewhat "granular", comprising a distribution of a plurality of solid elements 120, three-dimensional irregular solids substantially prism-like, having physical and spatial properties distributed, e.g., stochastically, on the patterned surface of the support 110. The thickness $T_0$ refers to the distance between the first side and the second side at the level which is the base for the solid elements 120, e.g. a base plane.

Any solid element in the plurality of solid elements 120 may comprise a pillar-like body 122 extending orthogonally to the reference surface 110, that is along direction Z perpendicular to the horizontal X-Y plane where the reference surface 110 lies, and an exposed facet 124 which may be flat, that is parallel to the horizontal XY plane, or tilted by an angle θ with respect to the horizontal XY plane. At least the three highest flat facets identify the horizontal refence plan for the RM alignment.

The pillar-like body 122 is a polygonal surfaced block, which may have the shape of a polyhedron, in particular a prismatoid, with two opposed bases, an upper face or 124 and a correspondingly shaped lower face which is integrated in the plane of the reference surface 110, with a lateral surface including a number of faces depending on the number of the sides of the polygonal facet 124. Such facet 124 is in most cases an irregular polygon with three to seven sides. As better explained such facet 124 may be horizontal or tilted at an angle with respect to the horizontal X-Y plane.

As exemplified in Figure 2, spatial and geometric properties of the solid elements 120 may comprise:

- a distance Di between solid elements, i.e. the pillar-like bodies 122, which defines interstices or channels therebetween, i.e. between the lateral faces of the pillar-like bodies 122.

- a tilt angle θ of the facet 124, which lower and upper point may lie between a minimum $T_i^l$ and a maximum thickness Tih of the pillar-like body 122 of the element 120,

- said at least one thickness, or height, $T_i^l$, $T_i^h$ of the pillar-like body 122, with respect to the base plane of the second side of the support 110, i.e. the total height of the support 110 in correspondence of a body 122 is e.g.

$T_i^l + T_0$ or $T_i^h + T_0$ ;

- a maximum diameter $L_i$ of the facets 124.

The solution here described is based on the observation that photometric properties of the RM device 100 may vary as a function of the distribution of such physical and spatial properties of the solid elements 120, in particular of their pillar-like bodies and of their facets 124.

Specifically, it is observed that the channels between pillar-like bodies may provide the diffusive light-reflective behavior, which simulate the contribution of the binder substance (e.g., potholes, bitumen) and three-dimensional irregular solids may simulate behavior of the rocks in the asphalt, representing the aggregate contributing to the specular behaviour.

The reference device here described is therefore configured by a support 110 having a support thickness $T_0$ and at least one flat base on a first side and a patterned surface on a second side opposed said first side, wherein such patterned surface comprises a solid pattern 120 of pillar-like formations 122, 124 and of channel-like formations 126 separating such pillar-like formations 122, 124 from one another. This arrangement of pillar-like formations and channel like formations is intended to reproduce respectively the diffusive light-reflective behavior due to the binder and the specular reflection due to the rocks in the asphalt.

The set of pattern parameters $T_i^l$, $T_i^h$, θ, Δ, $L_i$, $D_i$, $K_i$ associated to geometric properties of said pillar-like formations 122, 124 and of said channel-like formations 126 is distributed over said solid pattern 120 according to a stochastic distribution which satisfies given ranges of such pattern parameters $T_i^l$, $T_i^h$, θ, Δ, $L_i$, $D_i$, $K_i$. These ranges, as mentioned, are comparable with the range of sizes of the corresponding quantities in the road pavements with granularities, e.g. asphalt or concrete, although they do not correspond necessarily in an exact manner. Rather, the values in such ranges are chosen in the order of the millimeters.

Therefore, the solution here described provides a reference device having a surface reproducing photometric properties, in particular reflective characteristics, of road pavements obtained by producing a distribution of such channels and pillar-like bodies,

The method here described provides, given a model of the pillar-like body, e.g. the geometrical model of a prismatoid, and given input ranges of height $T_i$, diameter $L_i$, tilt angle θ, a range of distances $D_i$ between elements 122, and also a number of side of the irregular polygon representing the facet 124, e.g. between three and four sides, or between three and five sides, to perform a simulation with Montecarlo methods of distributions of pillars 122 which match the criteria of fitting the surface of a tile and which respective input ranges and parameters matches such given input ranges and parameters. Several different distributions can be of course obtained.

Figures 2 to 5 show different alternative embodiments of the RM devices 100 presenting different patterns, wherein the shapes of the 3D solids structures are randomized in terms of position $D_i$, tilt θ and dimension $L_i$.

A method of manufacturing such an RM device 100 thus may comprise defining ranges of values for such spatial $D_i$, geometrical $T_i^l$, $T_i^h$, $L_i$ and optical properties of the materials of which the device 100 is made.

As a result, a set of reference devices 100 as synthetic samples of a road surface may be obtained, that is material having a photometric behavior similar to that of a real road surface sample.

Table I summarized possible ranges for geometrical and spatial parameters of the solid-shapes 120.

**Table I**

| $D_i$ [mm] | $L_i$ [mm] | $T_i^l$, $T_i^h$ [mm] |
|---|---|---|
| 7 | 6.38 to 12.6 | 5 to 9.95 |
| 8 | 6.9 to 13.44 | 5 to 9.98 |
| 9 | 8.24 to 17.4 | 5 to 9.99 |
| 10 | 8.54 to 16.12 | 5 to 10 |
| 7 | 6.92 to 12.98 | 5 to 9.95 |
| 7 | 5.88 to 12.8 | 5 to 11 |

Therefore in general the geometrical and spatial parameters of the solid-shapes 120, are of the order of millimeters, for instance distance $D_i$, maximum diameter $L_i$ of the facets 124 and height $T_i^l$, $T_i^h$ are of the order of millimeters, in particular their value may range between 1 and 20 mm.

More in particular, distance $D_i$ may range between 5 and 15 mm, maximum diameter $L_i$ of the facets 124 may range between 4 and 20mm, while height $T_i^l$, $T_i^h$ may range between 4 and 15 mm.

A flat/tilt ratio in percentage may range between 10% and 30%.

In Table I it is shown a summary of spatial and geometrical parameter ranges, with distance $D_i$, size range $L_i$ and height $T_i^l$, $T_i^h$ in columns.

Other spatial or geometrical parameters which may be varies to determine photometric properties of the RM device may comprise:

- a corner value Ki, that is the distance between facets,

- a differential Δ between minimum and maximum heights $T_i^l$, $T_i^h$ of the tilted facets,
- ratio between number of flat surfaces and tilted surfaces,
- a noise level to introduce further stochastic variations,
- edge radius, that is a level of rounding of edges of the facets 124.

RM devices 100 may be prototyped with a 3D printer, e.g. using chalk as 3D printing material, before being manufactured with specific materials as discussed in the following.

In one or more embodiments, such an operation of manufacturing may comprise supplying 3d-printing material to the 3d-printer to obtain such RM devices 102, 104, 106.

One or more embodiments may be 3D printed using one or more materials selected out of a group of materials consisting of: aluminum, an austenitic nickel-chromium-based superalloy, iron, graphite, thermoplastic materials.

As discussed herein the term thermoplastic material refers to plastic polymer materials that becomes pliable or moldable at a certain elevated temperature and solidify upon cooling.

Such materials may preferably comprise thermoplastic materials having a paint sheen with different colors and glossiness, preferably glossy or matte (or flat) black or grey coloring. Such a coloring and levels of glossiness may facilitate mimicking the behavior of the road pavement material.

One or more embodiments may preferably not comprise metallic materials, so as to reduce polarization effects that can influence measurement results.

Preferably, such thermoplastic materials having a glossy black, matte grey or and matte black coloring. By way of example, these may be selected in a group of materials comprising:

- materials like Acrylonitrile butadiene styrene (ABS), also known as ABS-like materials,
- a material known with the commercial name of Jet Fusion Grey™,
- a material known by the commercial name of Jet Fusion Black™.

One or more embodiments may also use White matte materials (Synthetic White and Synthetic White Premium) having high reflectance diffuse behavior, above 75 %.

One or more embodiments advantageously use materials presenting a flat spectrum (without strong spectral dependency) in order to avoid spectrum divergences induced because of different detector spectral sensitivity and illuminating source influences.

In one or more embodiments, a kit of calibration RM devices may comprise a set of diffusing flat samples that will highlight linearity behavior of instruments. For instance, discrepancies in the measurements will be related to linearity or severe calibration issues.

**Table II**

| Material | Color | Specularity | $L_i$ [mm] | $T_i^l$, $T_i^h T$ [mm] | Flat/tilt ratio [%] |
|---|---|---|---|---|---|
| JET FUSION | Grey | Matte | 6 to 10 | 5 to 10 | 20 |
| JET FUSION | Grey | Matte | 6 to 10 | 5 to 7 | 20 |
| JET FUSION | Black | Matte | 6 to 10 | 5 to 7 | 20 |
| ABS LIKE | Black | Glossy | 6 to 10 | 5 to 7 | 20 |

In Table II is shown a summary of properties of RMs which may be used to produce in a kit of RMs

In one or more embodiments, a kit of calibration RM devices may comprise a set of reference material devices or samples 100, 100', 100" in order to highlight linearity behavior of instruments.

For instance, during measurement using such a calibration toolkit, discrepancies in the luminance measurements with respect to values of the r-tables are going to be related to linearity or severe calibration issues of the measurement instrument, for instance a photogoniometer.

Thus, the solution here described refers also to a method of measurement measurement of road surface reflection properties comprising using a kit of RM as described in present description.

For instance, the calibration toolkit may be used for calibrating a portable device for in situ measurement of road surface properties.

A portable device suitable for use in co-operating with the calibration toolkit as exemplified herein may be discussed in document:

Sørensen, Kai: "A box for the measurement of road surface reflection properties" - version 21 February 2018 (https://nmfv.dk/wp-content/uploads/2018/05/A-box-for-the-measurement-of-road-surface-reflection-properties-version-21-February-2018.pdf).

A further portable measurement apparatus, in particular a goniophotometer, suitable for use in co-operating with the calibration toolkit is discussed in document:

Y. Guillard V. Muzet, JL.Paumier. Coluroute: "a mobile gonio-reflectometer to characterize the road surface photometry", In Proceedings of CIE International Symposium on Road Surface Characteristics, pages CD-ROM, 2007.

Thus, in general a method of manufacturing a reference device 100 having a surface reproducing the reflectance of a road pavement as measured in a given measurement setup, such as setup 20, comprising a synthetic road pavement sample product may comprise:

defining said given ranges of such pattern parameters $T_i^l$, $T_i^h$, θ, Δ, Li, Di, K,

performing, by a computer or other processing means, a simulation of distributions of pillars 122 in said support 100, selecting at least a distribution of pillars which satisfies such given ranges of pattern parameters $T_i^l$, $T_i^h$, θ, Δ, $L_i$, $D_i$, $K_i$ and obtaining a digital 3D model of said selected distribution,

manufacturing, in particular by additive manufacturing or 3D printing, the quadrangular support 110 wherein said patterned surface comprises a solid pattern 12 corresponding to said digital 3D model of said selected distribution.

The step of defining said given ranges of such pattern parameters $T_i^l$, $T_i^h$, θ, Δ, Li, Di, K, may be performed using the corresponding ranges of a given type of road pavement, i.e. in particular asphalt. It is however underlined that the present reference device and method are intended to reproduce reference photometric properties which can be used to calibrate a reflective characteristics measurement system, while it is not necessary to reproduce the exact spatial reflectance distribution of a given sample or type of road pavement.

As exemplified in Figure 9, a method 60 of manufacturing one or more RM material devices 100 suitable to calibrate luminance measurement instruments may then comprise:

a step 600 of selecting a size of a reference surface 110,

a step 610 of selecting a thermoplastic material and a finish having a black or grey coloring and a glossy or matte finish, so as to mimic reflectance levels of a road pavement;

a step 620 of setting such pattern parameters $T_i^l$, $T_i^h$, θ, Δ, $L_i$, $D_i$, K, specifically geometric parameters (thicknesses, slopes, widths) of a pattern of pillar-like shapes protruding from a reference surface 110 and separated by channels therebetween;

a step 630 of performing 3d printing of at least one reference material device 100 comprising a tile support base 110 from which the plurality of solid elements 120, wherein 3D printing comprises using the selected 3D printing material.

The method may involve also iterating the method steps 600, 610, 620 to perform further optimization, for instance to adapt to different measurement systems.

It will be otherwise understood that the various individual implementing options exemplified throughout the figures accompanying this description are not necessarily intended to be adopted in the same combinations exemplified in the figures. One or more embodiments may thus adopt these (otherwise non-mandatory) options individually and/or in different combinations with respect to the combination exemplified in the accompanying figures.

Without prejudice to the underlying principles, the details and embodiments may vary, even significantly, with respect to what has been described by way of example only, without departing from the extent of protection. The extent of protection is defined by the annexed claims.

**Claims**

**1.** A reference device for measurement of reflection characteristics, in particular measurement of luminance, of the surface of road pavements (100) by a photometric instrument configured to detect the light reflected by said road pavements in determined geometric conditions (Q, P, O, α, β, ε) of incidence (β, ε) of the light on the road pavement and of detection (α) of said reflected light, comprising a synthetic road pavement sample product comprising a support (110) having a support thickness (To) and at least one flat base on a first side and a patterned surface on a second side opposed said first side,

wherein said patterned surface comprises a solid pattern (120) of pillar-like formations (122, 124) and of channel-like formations (126) separating said pillar-like formations (122, 124) from one another,

a set of pattern parameters ( $T_i^l$, $T_i^h$, $\theta$, $\Delta$, $L_i$, $D_i$, Ki) associated to geometric properties of said pillar-like formations (122, 124) and of said channel-like formations (126) being distributed over said solid pattern (120)

according to a stochastic distribution which satisfies given ranges of said pattern parameters ( $T_i^l$, $T_i^h$, $\theta$, $\Delta$, $L_i$, $D_i$, $K_i$).

2.  The reference device (100) of claim 1, wherein said prism-like formations (122, 124) each include a pillar-like body (122) and an exposed facet (124) and wherein said set of pattern parameters ( $T_i^l$, $T_i^h$, $\theta$, $\Delta$, $L_i$, $D_i$, $K_i$) comprises

a first subset of pattern parameters ( $T_i^l$, $T_i^h$, $\theta$, $\Delta$, $L_i$, $D_i$) , $\theta$, $\Delta$, $L_i$, $D_i$) $T_i^h$ , associated to a certain

thickness $(T_i^l)$ of said pillar-like body (122) of said prism-like formations as well as to a certain diameter (Li) and a certain tilt ($\theta$), with respect to said flat base, of said facet (124),

3.  The reference device of claim 1 or claim 2, wherein said channel-like formations (126) have a certain depth equal to said certain thickness $(T_i^l, T_i^h)$ of adjacent pillar-like prism-like formations (122, 124) and wherein said set of pattern parameters ( $T_i^l$, $T_i^h$, $\theta$, $\Delta$, $L_i$, $D_i$, $K_i$) comprises a second subset of pattern parameters (

$T_i^l, T_i^h$, $\theta$, $\Delta$, $L_i$, $D_i$) , $T_i^h$, $\theta$, $\Delta$, $L_i$, $D_i$) associated to a first width ($D_i$) of said channel-like formation (126) located at a same level of said reference thickness ($T_0$) and a second width ($K_i$) of said channel-like formation (126) located at a same level of said certain thickness $(T_i^l, T_i^h)$ of said adjacent pillar-like prism-like formations (122, 124).

4.  The reference device (100) of any of the previous claims, comprising thermoplastic material.

5.  The reference device (100) of claim 4, **characterized in that** it is obtained via additive manufacturing.

6.  The reference device (100) of claim 4, comprising a thermoplastic 3D printable material having specific light-reflecting properties selected out of glossy black, matte grey, and matte black coloring.

7.  The reference device (100) of any of the previous claims, wherein values of said a certain diameter (Li) of said facet (124) of said prism-like formations (120) in the first subset of pattern parameters ( $T_i^l$, $T_i^h$, $\theta$, $\Delta$, $L_i$) in said set

of pattern parameters ( $T_i^l$, $T_i^h$, $\theta$, $\Delta$, $L_i$, $D_i$, $K_i$) , $T_i^h$ , $\theta$, $\Delta$, $L_i$, $D_i$, $K_i$) are in a range between about 6 millimeters and about 10 millimeters.

8.  The reference device (100) of any of the previous claims, wherein a ratio between facets having a value of tilt equal to about zero and of facets having a tilt value different from zero is about 20%.

9.  The reference device (100) of claim 8, wherein values of said certain thickness $(T_i^l)$ of said pillar-like body (122) of said prism-like formations (120) in the first subset of pattern parameters ( $T_i^l$, $T_i^h$, $\theta$, $\Delta$, $L_i$) , $T_i^h$ , $\theta$,

$\Delta$, $L_i$) in said set of pattern parameters ( $T_i^l$, $T_i^h$, $\theta$, $\Delta$, $L_i$, $D_i$, Ki) range between about 5 millimeters and about 10 millimeters.

**10.** The reference device (100) of any of the previous claims, wherein said given ranges of said pattern parameters (

( $T_{i}^{l}$, $T_{i}^{h}$ , θ, Δ, L$_i$, D$_i$, K$_i$) are drawn from a stochastic distribution of parameters of road pavements (12).

**11.** The reference device (100) of claim 1, wherein said measurement setup is configured to measure the light reflected by road surfaces illuminated by a light source (10) emitting light impinging thereon at an observed point (P), the light propagating from the source (10) along a light path (20) so as to determine, as seen from an observation point (O) at a given viewing direction angle α with respect to the road, in particular of having the value of 1°:

e) a first incidence angle (ε) between the light path (20) and a normal (N) to the road surface (12); and
f) a second incidence angle (β) between a vertical plane passing for the observation point (O) and the observed point (P) and a vertical plane passing for the observed point (P) and the road luminaire (20).

**12.** A kit of reference material devices configured to calibrate a photometric instrument configured to detect the light reflected by said road pavements in determined geometric conditions (Q, P, O, α, β, ε) of incidence (β, ε) of the light on the road pavement and of detection (α) of said reflected light (12) to measure the luminance of a road surface, the kit comprising at least a reference device according to any of claims 1 to 11.

**13.** The kit according to claim 12, comprising a plurality of reference devices (100) according to any of claims 1 to 10 each having different values of pattern parameters.

**14.** The kit according to claim 12 or claim 13, comprising further reference devices with smooth or different patterns.

**15.** A method (60) of manufacturing a reference device for measurement of reflection characteristics, in particular measurement of luminance of the surface of road pavements (100) by a photometric instrument configured to detect the light reflected by said road pavements in determined geometric conditions (Q, P, O, α, β, ε) of incidence (β, ε) of the light on the road pavement and of detection (α) of said reflected light, comprising a synthetic road pavement sample product according to any of claims 1 to 11, the method (60) comprising:

defining said given ranges of said pattern parameters ( ( $T_{i}^{l}$, $T_{i}^{h}$, θ, Δ, L$_i$, D$_i$, K$_i$) $T_{i}^{h}$ , θ, Δ, L$_i$, D$_i$, K$_i$),
performing a simulation of distributions of pillars 122 in said support (100), selecting at least a distribution of pillars which satisfies said given ranges of said pattern parameters ( $T_{i}^{l}$, $T_{i}^{h}$ , θ, Δ, L$_i$, D$_i$, K$_i$) and obtaining a digital 3D model of said selected distribution,
manufacturing (630) said support (110) wherein said patterned surface comprises a solid pattern (120) corresponding to said digital 3D model of said selected distribution.

**16.** The method of claim 15, wherein said operation of manufacturing (630) comprises manufacturing via additive manufacturing, in particular using thermoplastic material.

**17.** The method of claim 15 or claim 16, wherein the method comprises manufacturing via additive manufacturing, in particular using thermoplastic material and said thermoplastic material has specific light-reflecting properties selected out of glossy black, matte grey, and matte black coloring.

**18.** A method of measurement of road surface reflection properties comprising using a kit according to any of claims 12 to 14.

FIG. 1

## FIG. 2

## FIG. 3

FIG. 4

EP 3 995 815 A1

EP 3 995 815 A1

## FIG. 5

## FIG. 6

Europäisches
Patentamt

European
Patent Office

Office européen
des brevets

# EUROPEAN SEARCH REPORT

**Application Number**

EP 21 20 7038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Svit Molds: "Concrete Mold pavers Stone Patio Casting Concrete Garden Path", , 10 February 2019 (2019-02-10), pages 1-14, XP055819818, Retrieved from the Internet: URL:https://www.amazon.com/PLASTIK-CASTING-CONCRETE-PAVING-PAVEMENT/dp/B01MSADS1A/ref=pd_lpo_201_img_1/259-4422758-4068131?_encoding=UTF8&pd_rd_i=B01MSADS1A&pd_rd_r=ee71dae7-09ee-4d3e-b869-a84ff88f8f6c&pd_rd_w=c5x2L&pd_rd_wg=VnWKh&pf_rd_p=fb1e266d-b690-4b4f-b71c-bd35e5395976&pf_rd_r=PHMJDPWRCAENN3RRAJFC [retrieved on 2021-06-30] * the whole document * ----- | 1-7,9-17 | INV. G01N21/47 G01N21/55 ADD. G01N21/57 |
| X | WO 2016/163346 A1 (AGC CERAM CO LTD [JP]) 13 October 2016 (2016-10-13) * paragraphs [0027] – [0053]; figures 1,2 * ----- | 1,2, 4-12, 16-18 | |
| A | BOMMEL ET AL: "Road Surfaces and lighting", JOINT TECHNICAL REPORT CIE/PIARC, XX, XX, vol. 66, 1 January 1984 (1984-01-01), XP002258261, * the whole document * ----- | 1-18 | TECHNICAL FIELDS SEARCHED (IPC) B33Y G01N |

-/--

The present search report has been drawn up for all claims

| Place of search | Date of completion of the search | Examiner |
|---|---|---|
| Munich | 9 March 2022 | Huenges, Alexandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

## EUROPEAN SEARCH REPORT

**Application Number**

EP 21 20 7038

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YIN ANYI ET AL: "2D and 3D Fracture Modeling of Asphalt Mixture with Randomly Distributed Aggregates and Embedded Cohesive Cracks", PROCEDIA IUTAM, vol. 6, 1 January 2013 (2013-01-01), pages 114-122, XP055819482, ISSN: 2210-9838, DOI: 10.1016/j.piutam.2013.01.013 * pages 115-117 * | 1-18 | |

TECHNICAL FIELDS SEARCHED (IPC)

The present search report has been drawn up for all claims

| Place of search | Date of completion of the search | Examiner |
|---|---|---|
| Munich | 9 March 2022 | Huenges, Alexandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 21 20 7038

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2022

| Patent document cited in search report | Publication date | Patent family member(s) | Publication date |
|---|---|---|---|
| WO 2016163346 A1 | 13-10-2016 | JP WO2016163346 A1<br>SG 11201707910S A<br>WO 2016163346 A1 | 01-02-2018<br>30-10-2017<br>13-10-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Calculation of performance. Light and lighting-road lighting. European standard, CEN, 2015
- Energy performance indicators. Road lighting. European standard, CEN, 2015
- Performance requirements. Light and lighting-road lighting. European standard, CEN, 2015
- Road surface and road marking reflection characteristics. Technical report. CIE, 2001
- **P. VERNY ; C. CHAIN ; F. LOPEZ.** Impact of real road photometry on public lighting design. *Proc. Of the CIA 26th Session, Bejing,* 2007
- **GIDLUND, H. ; LINDGREN, M. ; MUZET, V. ; ROSSI, G. ; IACOMUSSI, P.** Road Surface Photometric Characterisation and Its Impact on Energy Savings. *Coatings journal,* 2019
- Recommended system for mesopic photometry based on visual performance. Technical report. the international commission on Illumination CIE, 2010
- The effect of spectral power distribution on lighting for urban and pedestrian areas. technical report. the international commission on Illumination CIE, 2014

- **SØRENSEN, KAI.** *A box for the measurement of road surface reflection properties,* 21 February 2018, https://nmfv.dk/wp-content/uploads/2018/05/A-box-for-the-measurement-of-road-surface-reflection-properties-version-21-February-2018.pdf
- **Y. GUILLARD ; V. MUZET ; JL.PAUMIER.** Coluroute: A mobile gonio-reflectometer to characterize the road surface photometry. *Proceedings of CIE International Symposium on Road Surface Characteristics,* 2007
- **MUZET et al.** Review of road surface photometry methods and devices - Proposal for new measurement geometries. *Lighting Research & Technology,* 2020, vol. 0, 1-17, https://journals.sagepub.com/doi/full/10.1177/147715352 0958454
- **Y. GUILLARD ; V. MUZET ; JL.PAUMIER.** a mobile gonio-reflectometer to characterize the road surface photometry. *Proceedings of CIE International Symposium on Road Surface Characteristics,* 2007